# EUROPÄISCHE PATENTANMELDUNG

(11) **EP 1 588 989 A2**
(43) Veröffentlichungstag der Anmeldung: **26.10.2005**
(21) Anmeldenummer: 05103338.9
(22) Anmeldetag: 25.04.2005
(51) Int. Cl.: C03B 11/08, G02B 5/18

(54) **Verfahren zur Herstellung eines Masters, Master und Verfahren zur Herstellung von optischen Elementen sowie optisches Element**

(30) Priorität: 23.04.2004 DE 102004020363
(71) Anmelder: Schott AG, 55122 Mainz (DE)
(72) Erfinder: Pawlowski, Edgar, 55271, Stadecken-Elsheim (DE); Dzick, Jürgen, 30926, Seelze (DE); Prof. Dr. Beier, Wolfram, 55270, Essenheim (DE); Dr. Wölfing, Bernd, 55124, Mainz (DE)
(74) Vertreter: Patentanwälte Kewitz & Kollegen

(57) **Zusammenfassung**

Die Erfindung betrifft ein Verfahren zur Herstellung eines Masters zur Herstellung von optischen Elementen mit optisch wirksamen Strukturen durch Abformen von auf dem Master ausgebildeten Strukturen auf einer Oberfläche eines optischen Substrats, mit den folgenden Schritten: Bereitstellen eines Substrats; Beschichten einer Oberfläche des Substrats zum Ausbilden einer Beschichtung auf dem Substrat; und Strukturieren der Beschichtung, um in der Beschichtung Strukturen auszubilden.

Die Erfindung betrifft auch einen Master zur Herstellung von optischen Elementen, ein Verfahren zur Herstellung von optischen Elementen sowie ein optisches Element mit zumindest einer Oberfläche, auf welcher zumindest abschnittsweise optisch wirksame Strukturen ausgebildet sind.

## Beschreibung

Die vorliegende Erfindung betrifft allgemein die Herstellung von optischen Elementen mit optisch wirksamen Strukturen durch Abformen von Strukturen, die auf einem Master bzw. Werkzeug ausgebildet sind, auf eine Oberfläche eines optischen Substrats. Insbesondere betrifft die vorliegende Erfindung ein Verfahren zur Herstellung eines Masters bzw. eines Werkzeugs, einen Master bzw. ein Werkzeug, sowie ein Verfahren zur Herstellung solcher optischen Elemente mit diffraktiven und/oder refraktiven Strukturen. Ein weiterer Gesichtspunkt der vorliegenden Erfindung betrifft ein optisches Element, auf dessen Oberfläche optisch wirksame Strukturen ausgebildet sind, insbesondere diffraktive und/oder refraktive Strukturen.

Optische Elemente der vorgenannten Art werden üblicherweise aus transparenten Materialien, wie beispielsweise Glas, Glaskeramik oder Kunststoff, hergestellt. Um Abbildungsfehler zu reduzieren oder auszugleichen, müssen die optisch wirksamen Strukturen mit hoher Präzision ausgebildet werden. Zu diesem Zweck sind Herstellungsverfahren mit mechanischen Bearbeitungsschritten bekannt, beispielsweise das Schleifen und Polieren von Linsen oder die Herstellung von Beugungsgittern, auch geblazeten Beugungsgittern (blazed gratings), durch Furchenbildung in einem optischen Substrat.

Aus dem Stand der Technik sind auch Herstellungsverfahren bekannt, bei denen die optisch wirksamen Strukturen durch Abformen von Strukturen, die auf einem Master bzw. Werkzeug ausgebildet sind, auf die Oberfläche eines optischen Substrats erzeugt werden. Die auf dem Master ausgebildeten Strukturen entsprechen dabei einer Negativform der auszubildenden optisch wirksamen Strukturen. Zum Abformen der auf dem Master ausgebildeten Strukturen auf die Oberfläche des optischen Substrats ist eine Heißformgebung oder ein Heißprägen bekannt, worin das optische Substrat auf eine Temperatur erwärmt wird, bei der dessen Oberfläche verformbar ist, und worin das optische Substrat und der Master unter einem ausreichenden Druck gegeneinander gedrückt werden, um die auf dem Master ausgebildeten Strukturen auf die Oberfläche des optischen Substrats abzuformen. Zum Abformen ist auch bekannt, ein Material des optischen Substrats in eine Form zu gießen oder zu spritzen, in welcher der Master geeignet angeordnet ist. Das letztgenannte Verfahren eignet sich insbesondere zur Massenherstellung von optischen Elementen aus Kunststoffmaterialien.

Den vorgenannten Verfahren ist gemeinsam, dass der Master und das optische Substrat wieder voneinander getrennt werden müssen (Entformen), was die erzielbaren Aspektverhältnisse, d. h. das Verhältnis von Tiefe zu Breite, von realisierbaren Strukturen, auf Werte von etwa 1:1 1 begrenzt. Weil der Abformvorgang dabei stets nahe oder oberhalb der Schmelztemperatur des Materials des optischen Substrats ausgeführt wird, ist es unvermeidlich, dass das Material des optischen Substrats beim Entformen, d. h. beim Abheben des Masters von dem optischen Substrat, dazu neigt, an dem Master anzuhaften, was die Genauigkeit des Abformvorgangs mindert und die Lebensdauer des Masters und dessen Präzision mindert. Dabei ist zu berücksichtigen, dass die Vorteile der vorgenannten Abformtechniken erst dann wirtschaftlich zum Tragen kommen, wenn mit demselben Master eine Vielzahl von optischen Elementen mit gleich bleibender Präzision hergestellt werden können, ohne dass die optischen Elemente aufwändig nachbearbeitet werden müssen. Dies ist insbesondere durch die vergleichsweise hohen Kosten zur Herstellung von präzisen Mastern und Heißformgebungs- bzw. Heißprägungswerkzeugen bedingt.

Um ein unmittelbares Anhaften des Materials des Masters an dem optischen Substrat zu verhindern, ist bekannt, die Oberfläche des Masters mit einer Schutzbeschichtung zu versehen. Eine solche Schutzbeschichtung muss hohen Anforderungen genügen, insbesondere muss diese fest haftend mit dem Substrat des Masters verbunden sein und sollte die Benetzbarkeit der Schutzbeschichtung mit dem Material des optischen Substrats gering sein. Dies führt zu erheblichen Einschränkungen bei der Auswahl von Materialien für die Schutzbeschichtung sowie von Beschichtungstechniken zum Beschichten des Substrats des Masters. Ferner besteht die Notwendigkeit, dass mit der gewählten Beschichtungstechnik eine sehr homogene und konturentreue Beschichtung auf die strukturierte Oberfläche des Masters aufgebracht werden muss, so dass auch noch die beschichteten Strukturen auf der Oberfläche des Masters für ein präzises Abformen geeignet sind. Dies führt zu weiteren erheblichen Einschränkungen bei der Auswahl der Materialien für die Schutzbeschichtung sowie der zu verwendenden Beschichtungstechniken.

Während die Strukturen auf der Oberfläche eines Mastersubstrats mit Techniken, wie diese aus der Halbleiterherstellung bekannt sind, insbesondere Photolithographie, sehr präzise ausgebildet werden können, führt die Schutzbeschichtung zu einer gewissen Verfälschung der Strukturen, insbesondere zur Rundung von Kanten und zu Oberflächenrauhigkeiten. Diese Effekte sind insbesondere beim Abformen von sehr feinen Strukturen und/oder von Strukturen mit hohen Aspektverhältnissen zu berücksichtigen.

Es besteht deshalb ein Bedürfnis, nach der Schaffung von präzisen und langlebigen Mastern bzw. Werkzeugen zur Heißformgebung bzw. zum Heißprägen. Weil die Master insbesondere zur Massenherstellung von optischen Elementen verwendet werden, können auch aufwändige Herstellungsverfahren zu erheblichen wirtschaftlichen Vorteilen bei der Massenherstellung von optischen Elementen führen.

W. Lukosz et al., "Embossing technique for fabricating integrated optical components in hard inorganic wave guiding materials", Optics Letters, October 1983 Vol. 8, No. 10, S. 537-539 offenbart ein Verfahren zum Prägen eines Wellenleiters in einer verformbaren Gel-Schicht bei Raumtemperatur. Die Dünnschicht wird aus organometallischen Verbindungen mittels eines Tauch-Ziehverfahrens ausgebildet. Nach dem Prägen wird der Film bei Temperaturen von mehreren 100° C ausgehärtet und in ein anorganisches Oxidmaterial umgewandelt. Zum Prägen wird ein mit der organischen Sol-Gel-Dünnschicht versehenes Substrat gegen ein Mastergitter gepresst. Das Mastergitter ist mit einer Aluminiumschicht überzogen.

US 6,591,636 B1 offenbart ein Werkzeug und ein Verfahren zur Glasformgebung. Bei der Glasformgebung wurden Oxidations- und Korrosionsprozesse beobachtet, insbesondere bei der Formgebung von Glaszusammensetzungen mit bedeutsamen Anteilen von Alkalibestandteilen und/oder alkalihaltigen Bestandteilen. Dies führt insbesondere zu matten Glasoberflächen, was unerwünscht ist. Zur Beschichtung des Formgebungswerkzeuges werden verschiedene oxidations- und korrosionsresistente Verbindungen vorgeschlagen, die entweder galvanisch abgeschieden oder durch physikalische Dampfabscheidung (PVD; Physical vapor deposition) oder chemische Dampfabscheidung (CVD; Chemical vapor deposition) aufgebracht werden.

JP 2003-342025 A offenbart einen Master zur Herstellung von fein strukturierten optischen Elementen, beispielsweise Mikrolinsen Arrays, Beugungsgittern, Fresnel-Zonenlinsen und dergleichen. Die Genauigkeit der Strukturen liegt unter einem Mikrometer. Die Strukturen werden zunächst auf einem Dummy photolithographisch mittels Synchrotronenstrahlung hergestellt. Auf dem so strukturierten Dummy wird eine nickelbasierte Legierung galvanisch abgeschieden. Dann wird der Dummy von der Beschichtung abgehoben, so dass eine Master-Form zur Herstellung der optischen Elemente übrig bleibt.

Aufgabe der vorliegenden Erfindung ist es, ein Verfahren zur Herstellung eines Masters, einen Master sowie ein Verfahren zur Herstellung von optischen Elementen bereitzustellen, womit sich optische Elemente mit optisch wirksamen Strukturen noch präziser und kostengünstiger herstellen lassen. Gemäß einem weiteren Gesichtspunkt der vorliegenden Erfindung soll ein optisches Element bereitgestellt werden, das noch präziser und kostengünstiger ausgebildet ist.

Diese und weitere Aufgaben werden gemäß der vorliegenden Erfindung durch ein Verfahren zur Herstellung eines Masters nach Anspruch 1, durch einen Master zur Herstellung von optischen Elementen nach Anspruch 18, durch ein Verfahren zur Herstellung von optischen Elementen nach Anspruch 21 sowie durch ein optisches Element nach Anspruch 27 gelöst. Weitere vorteilhafte Ausführungsformen sind Gegenstand der rückbezogenen Unteransprüche.

Gemäß der vorliegenden Erfindung wird ein Verfahren zur Herstellung eines Masters zur Herstellung von optischen Elementen mit optisch wirksamen Strukturen durch Abformen von Strukturen, die auf dem Master ausgebildet sind, auf einer Oberfläche eines optischen Substrats bereitgestellt, mit den folgenden Schritten: Bereitstellen eines Substrats; Beschichten einer Oberfläche des Substrats zum Ausbilden einer Beschichtung des Substrats; und Strukturieren der Beschichtung, um in der Beschichtung Strukturen auszubilden, die auf die Oberfläche des optischen Substrats abgeformt werden sollen.

Weil die Strukturen, die abgeformt werden, erfindungsgemäß direkt in der Beschichtung oder auf einer Oberfläche der Beschichtung ausgebildet sind, wird deren Profil und Genauigkeit nicht durch einen weiteren Beschichtungsprozess beeinträchtigt, wie dies im Stand der Technik bei der Beschichtung eines bereits strukturierten Masters mit einer Schutzbeschichtung der Fall ist. Somit ist erfindungsgemäß eine feinere Strukturierung mit einem höheren und präziseren Kantenwinkel und einer geringeren Rauhigkeit der optisch wirksamen Strukturen möglich.

Ein weiterer Vorteil ist, dass erfindungsgemäß zur Beschichtung des Substrats eine große Vielzahl unterschiedlicher Beschichtungstechniken und/oder Beschichtungsmaterialien verwendet werden können, weil erfindungsgemäß die Bedingungen bei der Beschichtung erheblich einfacher sind (es müssen keine bereits ausgebildeten Strukturen gleichmäßig beschichtet werden).

Somit kann die Beschichtung erfindungsgemäß sehr gleichmäßig, homogen und mit geringer Oberflächenrauhigkeit ausgebildet werden, was die Qualität von optischen Bauelementen noch weiter erhöht.

Insbesondere können erfindungsgemäß zur Beschichtung des Substrats nahezu beliebige Materialien gewählt werden, insbesondere solche, die eine vorteilhaft geringe Benetzbarkeit mit dem Material des optischen Substrats aufweisen. Gemäß dem Stand der Technik können hingegen viele solcher Materialen zur Beschichtung von feinen Strukturen nicht oder nur unter großem Aufwand verwendet werden.

Als besonders bevorzugtes Verfahren zur Strukturierung der Beschichtung hat sich ein Ionenstrahlätzen (IBE: ion beam etching), ein reaktives Ionenstrahlätzen (RIE: reactive ion etching) oder ein chemisch unterstütztes Ionenstrahlätzen (CAIBE: chemical assisted ion beam etching) erwiesen, weil so Strukturen in der Beschichtung sehr homogen und präzise ausgebildet werden können.

Weitere Gesichtspunkte der vorliegenden Erfindung sind gerichtet auf einen Master zur Herstellung von optischen Elementen, auf ein Verfahren und eine Vorrichtung zum Herstellen von optischen Elementen sowie auf ein optisches Element mit zumindest einer Oberfläche, auf welcher zumindest abschnittsweise optisch wirksame Strukturen ausgebildet sind, insbesondere diffraktive und/oder refraktive Strukturen.

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden und worin:
- Fig. 1: in einem schematischen Querschnitt einen Master zur Herstellung von optischen Elementen gemäß der vorliegenden Erfindung darstellt;
- Fig. 2a-2b: jeweils in einem schematischen Querschnitt einen Master zur Herstellung von optischen Elementen gemäß einer weiteren Ausführungsform gemäß der vorliegenden Erfindung darstellen;
- Fig. 2c: in einem vergrößerten Teilschnitt einen Master zur Herstellung eines geblazeten Beugungsgitters (blazed diffraction grating) mit kontinuierlichem Profil darstellt;
- Fig. 2d: in einem vergrößerten Teilschnitt einen Master zur Herstellung eines geblazeten Beugungsgitters mit gestuftem Profil darstellt;
- Fig. 3a-3d: in einem schematischen Querschnitt die Verfahrensschritte zur Herstellung des Masters gemäß der Fig. 1 darstellen;
- Fig. 3e: eine Modifikation des Masters gemäß der Fig. 1 mit einer Ätzstoppschicht darstellt;
- Fig. 4: die Verfahrensschritte zur Herstellung eines Masters gemäß der vorliegenden Erfindung zusammenfasst;
- Fig. 5: in einer schematischen Schnittansicht eine Vorrichtung zur Herstellung von optischen Elementen gemäß einer ersten Ausführungsform der vorliegenden Erfindung darstellt;
- Fig. 6: in einer schematischen Schnittansicht eine Vorrichtung zur Herstellung von optischen Elementen gemäß einer zweiten Ausführungsform der vorliegenden Erfindung darstellt; und
- Fig. 7: ein optisches Element gemäß der vorliegenden Erfindung darstellt, das mithilfe des Masters gemäß der Fig. 2a hergestellt ist und sowohl diffraktive als auch refraktive Strukturen auf seiner Oberfläche aufweist.

In den Figuren bezeichnen identische Bezugszeichen identische oder im Wesentlichen gleich wirkende Elemente oder Elementgruppen.

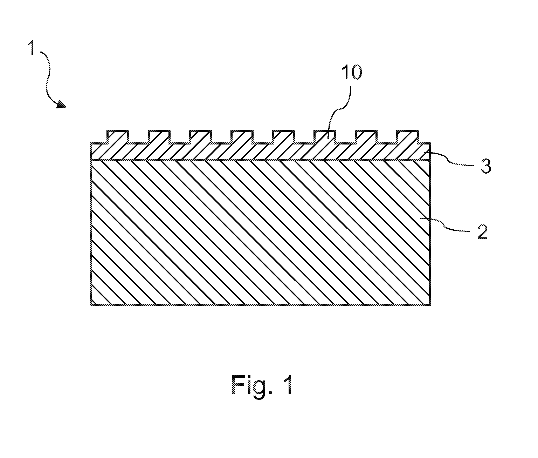

Die Fig. 1 zeigt in einem schematischen Querschnitt einen Master zur Herstellung von optischen Elementen gemäß der vorliegenden Erfindung. Der Master dient bevorzugt als Negativform bzw. Vorlage für optisch wirksame Strukturen, die auf der Oberfläche eines optischen Substrats ausgebildet werden sollen, insbesondere durch Heißformgebung bzw. Heißprägen. Gemäß der Fig. 1 umfasst der insgesamt mit 1 bezeichnete Master ein Substrat 2, auf dessen Oberfläche eine Beschichtung 3 ausgebildet ist. Das Substrat 2 ist bei den zur Heißformgebung bzw. zum Heißprägen verwendeten Drücken und Temperaturen ausreichend formstabil. Bevorzugte Materialien des Substrats 2 sind beispielsweise Stahl, Wolframkarbid (WC) oder Molybdän (Mo). Gemäß der Fig. 1 ist die Beschichtung 3 strukturiert, also mit Strukturen 10 versehen, die als Negativform für optisch wirksame Strukturen dienen, die auf dem optischen Substrat (nicht dargestellt) durch Abformen ausgebildet werden sollen. Gemäß der Fig. 1 sind die Strukturen 10 in der Beschichtung 3 ausgebildet. Die Strukturen 10 sind auf der dem Substrat 2 abgewandten Oberfläche der Beschichtung 3 ausgebildet. Die Beschichtung 3 ist erfindungsgemäß durch unmittelbares Abscheiden eines Beschichtungsmaterials, wie nachfolgend beschrieben, auf der Oberseite des Substrats 2 aufgebracht und vollflächig und fest haftend mit dem Substrat 2 verbunden.

Gemäß der Fig. 1 umfassen die Strukturen 10 eine Mehrzahl von im Wesentlichen rechteckförmigen Erhebungen und Vertiefungen auf der Oberfläche der Beschichtung 3. Die vorliegende Erfindung ist jedoch nicht auf im Wesentlichen rechteckförmige Strukturen in der Beschichtung beschränkt, vielmehr können die Strukturen 10 gemäß der vorliegenden Erfindung auch mit beliebigen anderen Profilen versehen sein, was von den optischen Effekten abhängig ist, die mit den auf dem optischen Substrat auszubildenden optisch wirksamen Strukturen bewirkt werden sollen, und was auch von den Verfahren abhängt, die zur Strukturierung der Beschichtung 3 verwendet werden, was nachfolgend noch ausführlicher dargelegt werden wird.

Gemäß der Fig. 1 erstrecken sich die Vertiefungen auf der Oberfläche der Beschichtung 3 nicht ganz bis zu der Oberfläche des Substrats 2. Vielmehr verbleibt auch am Boden der Vertiefungen eine Schicht mit einer Mindestdicke aus dem Material der Beschichtung 3, so dass bei der Ausführungsform gemäß der Fig. 1 stets gewährleistet ist, dass das Material des optischen Substrats beim Abformen der Strukturen 10 nicht in Kontakt zu dem Material des Substrats 2 gerät, sondern dass stets eine Schicht mit einer Mindestdicke aus dem Material der Beschichtung 3 zwischen dem optischen Substrat und dem Substrat 2 des Masters 1 verbleibt.

Das Material der Beschichtung 3 wird erfindungsgemäß so gewählt, dass die Benetzbarkeit der Beschichtung 3 mit dem Material des optischen Substrats, auf dem die optisch wirksamen Strukturen durch Abformen ausgebildet werden, möglichst gering ist. Grundsätzlich ist diese Materialwahl somit abhängig von dem Material des optischen Substrats. Im Falle der Heißformgebung oder des Heißprägens von Glassubstraten oder Glaskeramik-Substraten hat es sich als besonders vorteilhaft erwiesen, die Beschichtung aus einem Edelmetall oder einer Edelmetalllegierung herzustellen, weil diese eine vorteilhaft geringe Benetzbarkeit der Beschichtung 3 mit dem Material des optischen Substrats aufweisen. Beispielsweise kann die Beschichtung 3 aus einer Legierung aus Platin (Pt) und Rhodium (Rh) gebildet sein.

Als vorteilhaft hat sich auch die Verwendung von Materialien für die Beschichtung 3 erwiesen, die eine Oxidation und/oder Korrosion in einem Glas oder einer Glaskeramik verhindern. Solche Materialien sind in der US 6,591,636 B1 offenbart, deren Inhalt hiermit im Wege der Bezugnahme ausdrücklich in dieser Anmeldung beinhaltet sei. Beispielhafte Materialien, die zur Ausbildung der Beschichtung 3 erfindungsgemäß verwendet werden können, sind insbesondere:

| | | |
|---|---|---|
| Cr | MCrAlY | SiC/MO |
| Cr₂O₃ | Dura-Nickel 301 | ZrO₂ |
| Cr₂O₃Si | Stellite 6 | CoCrAlY |
| CrN/CrC | mgO | Pt/Rh |
| TiC | Ni/N | Ir |
| TiCN | Al₂O₃ | ErO |
| TiAlN | Nb/NbC | TiB₂ |
| TiC/Al₂O₃ | B₄C/W | NiWB |
| TiN | B₄C/MO | MgAlY |
| TiCN/TiC/TiCN/TiN | SiC/W | |

Die minimale Dicke d der Beschichtung 3 unterliegt erfindungsgemäß grundsätzlich nur wenigen Beschränkungen. Grundsätzlich wird man aus Gründen der Materialersparnis und aus Qualitätsgründen danach trachten, die Dicke d möglichst gering zu halten, bevorzugt so, dass die Vertiefungen der Strukturen 10 sich nicht ganz bis zu der Oberfläche des Substrats 2 hin erstrecken. Generell ist die Mindestdicke d der Beschichtung 3 durch das Profil der Strukturen 10 vorgegeben, die auf das optische Substrat abgeformt werden sollen. Sofern mit Hilfe der Strukturen 10 diffraktive Strukturen abgeformt werden sollen, beispielsweise Beugungsgitter, geblazete Beugungsgitter, holographische Beugungsgitter, Fresnel-Zonenplatten, Fresnel-Zonenlinsen und dergleichen, so ist die Mindestdicke d der Beschichtung 3 zweckmäßig so gewählt, dass gilt: d ≥ λ/Δn, wobei λ einer Wellenlänge von Licht entspricht, das von den diffraktiven optisch wirksamen Strukturen gebeugt werden soll, und Δn einer Differenz zwischen dem Brechnungsindex des Materials des optischen Substrats, in welchem die optisch wirksamen Strukturen ausgebildet werden sollen, und dem Brechungsindex von Luft entspricht. Wenn beispielsweise diffraktive Strukturen zur Beugung von Laserlicht eines CO₂-Lasers mit einer Wellenlänge von 10,6 µm hergestellt werden sollen und das optische Substrat aus Si mit einem Brechungsindex von etwa n = 3,4 ausgebildet wird, so ergibt die vorgenannte Formel eine Mindestdicke d der Beschichtung 3 von etwa 4 µm. Entsprechende Mindestdicken d der Beschichtung 3 zur Beugung von Licht im sichtbaren und nahen infraroten Bereich betragen etwa mindestens 1 bis 2 µm.

Sofern die Strukturen 10 der Beschichtung 3 zur Ausbildung von refraktiven optischen Elementen dienen, beispielsweise von Mikrolinsen, Mikrolinsen-Arrays, Mikroprismen, Mikrospiegeln oder dergleichen, so ist die Mindestdicke d der Beschichtung 3 durch die minimale Höhe solcher refraktiven Strukturen auf der Oberfläche des optischen Substrats gegeben. Da jedoch Schichten mit nahezu beliebigen Schichtdicken mittels geeigneter Beschichtungstechniken ohne weiteres auf das Substrat 2 aufgebracht werden können, unterliegt die Erfindung praktisch kaum Beschränkungen.

Gemäß der Fig. 1 ist die Oberseite des Substrats 2 plan. Die Rauhigkeit der Oberseite der Beschichtung 3 ist einerseits durch das Material der Beschichtung 3 und durch das gewählte Beschichtungsverfahren gegeben, kann jedoch andererseits auch durch die Rauhigkeit der Oberseite des Substrats 2 beeinflusst sein. Ist beispielsweise die Oberseite des Substrats 2 vergleichsweise rau, so wird auch die Oberseite der Beschichtung 3 jedenfalls dann, wenn die Dicke d vergleichsweise klein ist, vergleichsweise rau sein. In Abhängigkeit von den gewählten Prozessparametern kann somit die Oberfläche des Substrats 2 auch feinpoliert oder geläppt sein.

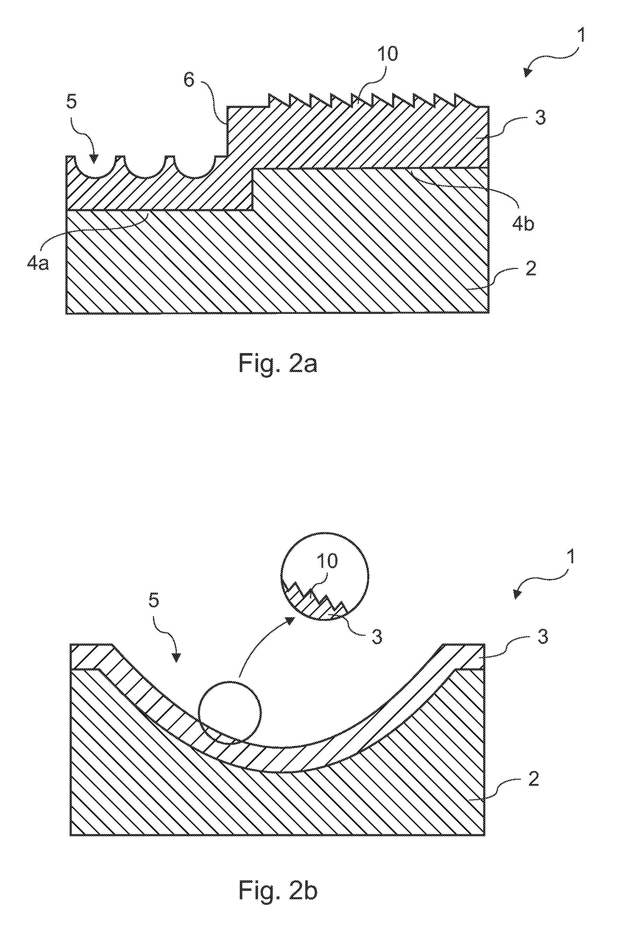

Gemäß der Fig. 1 ist die Oberseite des Substrats 2 eben ausgebildet, weist also keine Vertiefungen, Erhebungen oder Stufen auf. Die Erfindung ist jedoch grundsätzlich auch auf Substrate anwendbar, die auf ihrer Oberfläche Höhen und/oder Vertiefungen aufweisen, also beispielsweise mit Vertiefungen, Erhebungen und/oder Stufen versehen sind, die beispielhaft in den Figuren 2a und 2b gezeigt sind.

Anhand der Figuren 2a bis 2b werden nachfolgend weitere Ausführungsbeispiele für einen Master gemäß der vorliegenden Erfindung erläutert. Gemäß der Fig. 2a weist das Substrat 2 des Masters 1 einen ersten planen Abschnitt 4a und einen zweiten planen Abschnitt 4b auf, zwischen denen eine Stufe ausgebildet ist. Auf das gestufte Substrat 2 ist eine Beschichtung 3 mit einer vorgegebenen Dicke aufgebracht. Die Stufe in dem Substrat 2 überträgt sich somit automatisch in einen stufenartigen Übergangsbereich 6 in der Beschichtung 3.

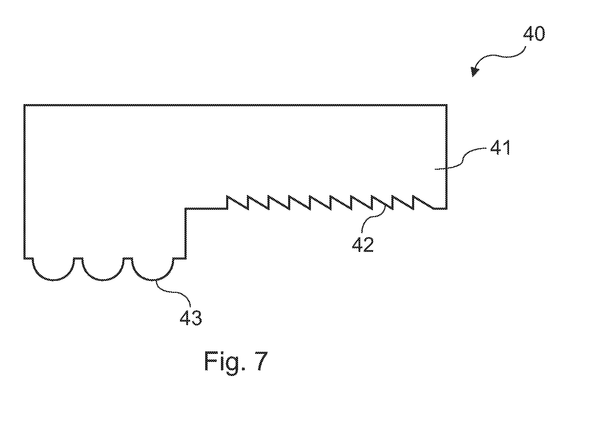

Anschließend wird die Beschichtung 3 strukturiert, um oberhalb des ersten planen Abschnittes 4a mehrere, äquidistant zueinander beabstandete sphärische Vertiefungen 5 und oberhalb des zweiten planen Abschnittes 4b eine Mehrzahl von äquidistant zueinander beabstandeten, sägezahnartigen Vorsprüngen 10 auszubilden. Durch Abformen der Strukturen der Beschichtung 3 kann so ein optisches Element ausgebildet werden, wie dies beispielhaft in der Fig. 7 dargestellt ist. Gemäß der Fig. 7 weist das optische Element 40 sowohl refraktive optische Elemente als auch diffraktive optische Elemente auf, nämlich auf der linken Seite einen Array von sphärischen Mikrolinsen 43 und auf der rechten Seite ein geblazetes Beugungsgitter 42, wobei zwischen dem diffraktiven Bereich 42 und dem refraktiven Bereich 43 eine Stufe ausgebildet ist.

Die Fig. 2b zeigt ein weiteres Ausführungsbeispiel, bei dem in dem Substrat 2 eine konkave Aussparung bzw. Hohlform 5 ausgebildet ist, die nach Abformung eine konvexe Oberfläche ergibt, beispielsweise die konvexe Oberfläche einer optischen Linse. Auf der Oberfläche des Substrats 2 ist eine Beschichtung 3 mit einer konstanten Dicke ausgebildet. Während das Substrat 2 vergleichsweise groß ausgebildet ist, ist in der Oberfläche der Beschichtung 3 eine Vielzahl von Mikrostrukturen ausgebildet, wie durch den vergrößerten Teilschnitt angedeutet. Gemäß dem vergrößerten Teilschnitt ist auf der Oberfläche der Beschichtung 3 ein Sägezahnprofil 10 ausgebildet. Durch Abformen der Strukturen des Masters 1 gemäß der Fig. 2b kann somit ein optisches Element mit einer konvexen Oberfläche geschaffen werden, in welcher eine Vielzahl von sägezahnförmigen Vertiefungen und Erhebungen ausgebildet sind.

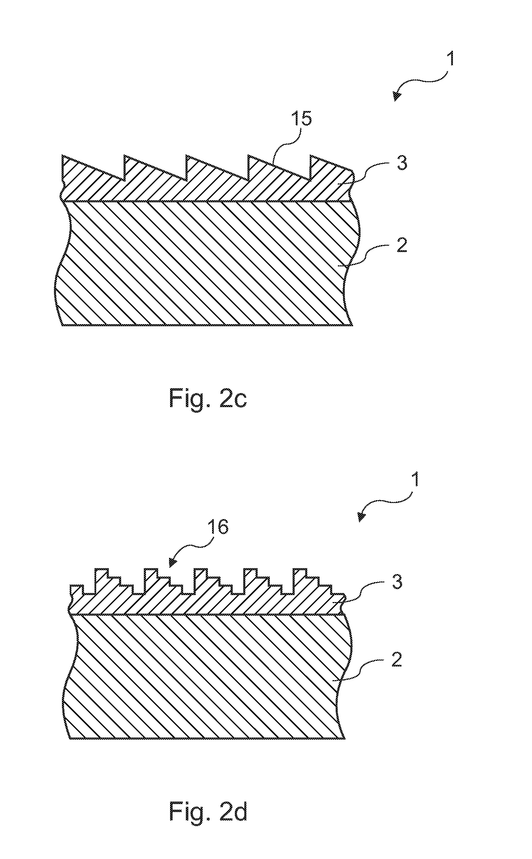

Gemäß der Fig. 2c können die in der Beschichtung 3 ausgebildeten sägezahnartigen Flanken grundsätzlich jeweils abschnittsweise, d.h. von Kante zu Kante, stetig verlaufen, was die Verwendung eines Verfahrens voraussetzt, das zur Ausbildung von solchen jeweils abschnittsweise stetigen Strukturen 15 in der Beschichtung 3 geeignet ist, was nachfolgend noch ausführlicher erläutert werden wird.

Grundsätzlich können die Mikrostrukturen jedoch auch mit Hilfe einer Mehrzahl von Prozessschritten ausgebildet werden, die nacheinander ausgeführt werden. Wie aus dem Stand der Technik bekannt ist, können mittels m Prozessschritte grundsätzlich Mikrostrukturen mit 2^{m} Höhenstufen ausgebildet werden. Gemäß der Fig. 2d kann durch geeignet gewählte Stufung der Mikrostrukturen 16 das Sägezahnprofil gemäß der Fig. 2c mit kontinuierlichen Flanken approximiert werden. Gestufte Strukturen, wie diese in der Fig. 2d gezeigt sind, können erfindungsgemäß zur Abbildung von computergenerierten Hologrammen in die Beschichtung 3 des Substrats 2 verwendet werden.

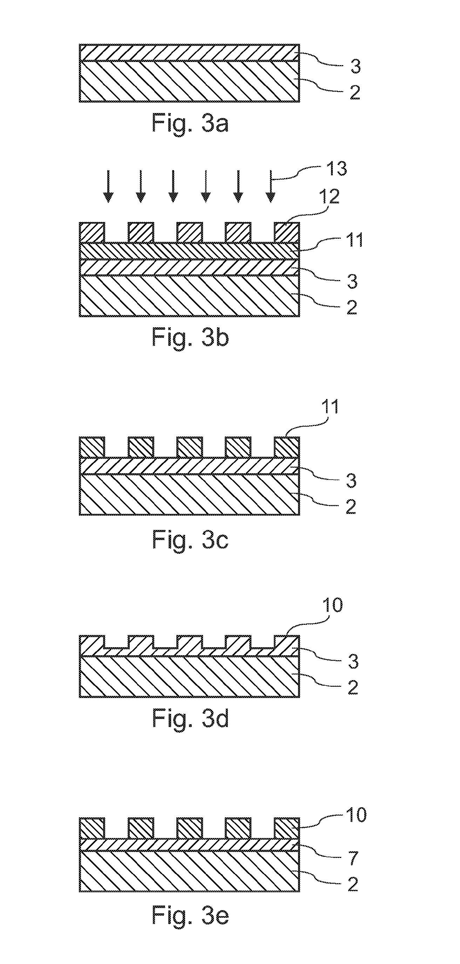

Anhand der Figuren 3a - 3d werden nachfolgend beispielhaft die Prozessschritte zur Herstellung des Masters gemäß der Fig. 1 beschrieben werden. Gemäß der Fig. 3a geht das erfindungsgemäße Verfahren zur Herstellung eines Masters von einem Substrat 2 aus, das mit einer Beschichtung 3 beschichtet ist, die gemäß der Fig. 3a eine konstante Dicke aufweist, die jedoch grundsätzlich auch abschnittsweise unterschiedliche konstante Dicken aufweisen kann. Das Substrat 2 ist bevorzugt ein planparalleles Substrat mit geringer Oberflächenrauhigkeit. Auf einer Skala, die größer ist als diejenige der auszubildenden optisch wirksamen Strukturen, kann das Substrat 2 grundsätzlich jedoch auch mit einem Profil versehen sein, wie dies beispielhaft in der Fig. 2b gezeigt ist.

Das zum Beschichten des Substrats 2 verwendete Verfahren hängt von der Zusammensetzung der Beschichtung 3 und von den gewünschten Eigenschaften der Beschichtung 3, insbesondere deren Oberflächenrauhigkeit, ab. Beispielhafte Verfahren sind: Galvanisches Abscheiden, Plasmabeschichten (Plasma spray coating), Sputtern, Magnetron-Sputtern, Plasma-unterstütztes Sputtern (Plasma-assisted-sputtering), Ionenstrahlsputtern (IBD) physikalische Dampfabscheidung (PVD; Physikal vapor deposition), chemische Dampfabscheidung (CVD; Chemical vapor deposition), elektronen- oder plasmaunterstützte physikalische Dampfabscheidung (EB-PVD; IB-PVD) sowie elektronenstrahl- oder ionenstrahlunterstützte Abscheidung (electron beam assisted deposition (EBAD); ion beam assisted deposition (IBAD)), PICVD, PECVD, MOCVD und Molekularstrahlepitaxie (molecular beam epitaxy; MBE).

Untersuchungen der Erfinder haben ergeben, dass für optische Wellenlängen im Bereich von etwa 10 µm (beispielsweise CO₂-Laser) eine mittlere Oberflächenrauhigkeit von etwa 100 nm rms ausreichend ist, dass für Anwendungen im sichtbaren oder ultravioletten Spektralbereich eine mittlere Oberflächenrauhigkeit von weniger als etwa 5nm rms ausreichend ist und das für den Einsatz in photolithographischen Belichtungsvorrichtungen (waver-stepper) eine mittlere Oberflächenrauhigkeit von weniger als etwa 1nm rms ausreichend ist.

Auf das so beschichtete Substrat gemäß der Fig. 3a wird eine Maskenstruktur aufgebracht, die in einem nachfolgenden Ätzschritt als Maske dient, um in der Beschichtung 3 Strukturen auszubilden. Aus dem Stand der Technik sind eine Vielzahl von Ätztechniken bekannt. Der nachfolgenden beispielhaften Beschreibung von Prozessschritten wird der Prozess eines Ionenstrahlätzens (Ion beam etching (IBE); häufig auch als "Ion beam milling" bezeichnet) zugrunde gelegt. Es sei jedoch ausdrücklich darauf hingewiesen, dass die nachfolgende Beschreibung von Prozessschritten nur beispielhaft erfolgt und dass gemäß der vorliegenden Erfindung auch beliebige andere Trocken- oder Nassätzverfahren eingesetzt werden können, insbesondere auch ein reaktives Ionenätzen (reactive ion beam etching; RIBE) und eines chemisch unterstützten Ionenstrahlätzens (chemical assisted ion beam etching; CAIBE).

Wie in der Fig. 3b gezeigt, wird die Beschichtung 3 mit einer Photolackschicht 11 bedeckt, die dazu verwendet wird, um in der Photolackschicht 11 durch optisches Belichten 13 ein gewünschtes Muster auszubilden, beispielsweise eine periodische Struktur, eine Gitterstruktur, oder eine andere optische Struktur. Die Zusammensetzung der Photolackschicht 11 und deren Aufbereitung sind herkömmlich gewählt. Die Photolackschicht 11 wird mit einer ausreichenden Dicke aufgebracht, um die Übertragung eines Musters auf die darunter befindliche Beschichtung 3 zu ermöglichen.

Um in der Photolacksicht 11 ein geeignetes Muster auszubilden, wird gemäß der Fig. 3b eine Maske 12 in Anlage zu der Photolacksicht 11 gebracht oder unmittelbar oberhalb der Photolacksicht 11 angeordnet. Die Maske 12 wird anschließend mit Licht 13 einer geeigneten Wellenlänge, beispielsweise einer UV-Strahlung, belichtet. Licht 13, das durch die transparenten Abschnitte der Maske 12 gelangt, bewirkt in den belichteten Abschnitten der Photolacksicht 11 eine chemische Veränderung, die sich auf die Materialeigenschaften der Photolackschicht 11 überträgt.

Selbstverständlich kann gemäß der vorliegenden Erfindung auch auf die Verwendung der Maske 12 verzichtet werden. So können Strukturen beispielsweise auch durch direktes Beschreiben der Photolacksicht 11 mit einem Lichtstrahl, bevorzugt einem Laser-Lichtstrahl, beispielsweise von einem Excimer-Laser, direkt beschrieben werden. Bei einer weiteren Ausführungsform gemäß der vorliegenden Erfindung können in der Photolacksicht 11 durch Interferenz von zwei kohärenten Lichtstrahlen, bevorzugt Laserlichtstrahlen, beispielsweise eines UV-Excimer-Lasers, holographische Muster direkt in die Photolackschicht 11 geschrieben werden.

Im Anschluss an die Belichtung wird die Maske 12 entfernt und die Photolacksicht 11 mit einem Entwickler entwickelt und werden unbelichtete oder belichtete Bereiche der Photolacksicht 11, je nach dem Typ des verwendeten Photolacks abgewaschen, was gemäß der Fig. 3c in der Photolacksicht 11 das gewünschte Muster zurücklässt. Dieses Muster kann bereits mit einem Mikroskop optisch untersucht werden und ggf. nachgebessert oder, sofern die Strukturen in der Photolackschicht 11 nicht zufriedenstellend sind, vollständig entfernt werden, sodass die Prozessschritte gemäß den Figuren 3a - 3c nochmals ausgeführt werden können, bis ein gewünschtes Muster in der Photolacksicht 11 ausgebildet ist.

Anschließend wird das Muster der Photolackschicht 11 als Maske für einen Ätzschritt verwendet, um das Muster in die Beschichtung 3 zu übertragen. Dabei reagieren diejenigen Bereiche der Beschichtung 3, die von dem Photolack 11 bedeckt sind, nicht mit dem Ätzmittel und werden somit nicht weggeätzt. Nach dem Ätzschritt werden die verbleibenden Abschnitte des Photolacks unter Verwendung von herkömmlichen Lösungsmitteln entfernt.

Damit der Ätzschritt noch kontrollierter gestoppt wird, kann die Beschichtung 3 gemäß einer weiteren Ausführungsform der vorliegenden Erfindung, die schematisch in der Fig. 3e gezeigt ist, zweilagig ausgebildet sein, mit einer unteren Ätzstoppschicht 7 und einer darüber befindlichen Schicht, in welcher die Strukturen 10 ausgebildet sind. Das Material der Ätzstoppschicht 7 ist gegen das verwendete Ätzmittel beständiger als das Material der darüber befindlichen Beschichtung 3, so dass das Ätzen definiert bei Erreichen der Ätzstoppschicht 7 beendet wird.

Selbstverständlich können die Ätzschritte auch mehrmals wiederholt werden, beispielsweise zur Ausbildung gestufter Profile, wie dies beispielhaft in der Fig. 2d gezeigt ist. Selbstverständlich kann das in der Photolacksicht 11 ausgebildete Muster gemäß der Fig. 3c auch in einem ersten Ätzschritt in eine Zwischenschicht übertragen werden, die zwischen der Photolacksicht 11 und der Beschichtung 3 ausgebildet ist, beispielsweise in eine Si-Schicht oder in eine SiO₂-Schicht, und kann die so in dieser Schicht ausgebildete Struktur dann in einem zweiten Ätzschritt in die darunter befindliche Beschichtung 3 übertragen werden.

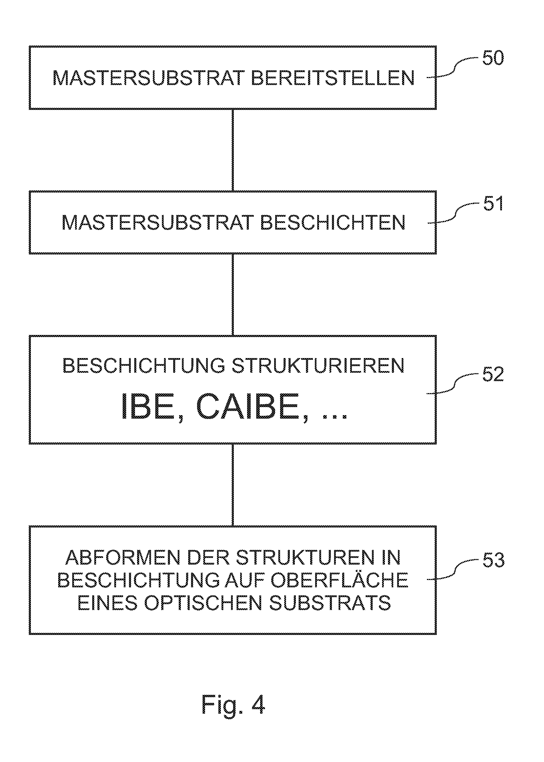

Die Fig. 4 fasst die Prozessschritte eines erfindungsgemäßen Verfahrens zur Herstellung eines Masters nochmals zusammen. Es sei nochmals ausdrücklich darauf hingewiesen, dass in dem Prozessschritt 51 erfindungsgemäß nahezu beliebige Beschichtungsverfahren zur Beschichtung des Substrats verwendet werden können, solange damit eine ausreichend haftungsbeständige Beschichtung mit einer ausreichenden Oberflächenrauhigkeit ausgebildet werden kann. Während vorstehend anhand der Figuren 3a - 3e Ätzverfahren zur Strukturierung der Beschichtung beschrieben wurden, wird dem Fachmann beim Studium der vorstehenden Beschreibung ohne weiteres ersichtlich sein, dass erfindungsgemäß grundsätzlich auch andere Verfahren zur Strukturierung der Beschichtung verwendet werden können, solange mit Hilfe dieser Verfahren geeignete Profile, insbesondere mit geeigneter Kantensteilheit, Kantenrundung, Präzision der Strukturen und Feinheit der Strukturen, ausgebildet werden können. Nachfolgend sollen einige bevorzugte Alternativen zu dem vorstehend beschriebenen Ätzverfahren zusammengefasst werden.

Grundsätzlich kann die Beschichtung erfindungsgemäß auch direkt bearbeitet werden. So kann die Oberfläche der Beschichtung mittels eines mechanischen Bearbeitungswerkzeuges spanend bearbeitet werden, beispielsweise zur Ausbildung von Furchen in der Beschichtung, ähnlich zur mechanischen Herstellung von optischen Beugungsgittern. Eine solche mechanische Bearbeitung kann sich insbesondere zur Ausbildung von Strukturen in der Beschichtung eignen, die zum Abformen von refraktiven Strukturen auf einem optischen Substrat verwendet werden, beispielsweise von konvexen oder konkaven Flächen, wie dies beispielhaft in der Fig. 2b gezeigt ist.

Eine andere Alternative, die gemäß der vorliegenden Erfindung ausdrücklich zur direkten Bearbeitung der Beschichtung angedacht ist, stellt ein direktes Ionen- oder Elektronenstrahlschreiben von Strukturen in die Beschichtung dar. Bekanntermaßen können durch das harte Aufprallen von Ionen- oder Elektronenstrahlen in dem Beschichtungsbereich Abschnitte abgetragen werden. Durch Scannen der Oberfläche der Beschichtung mit einem Ionen- oder Elektronenstrahl kann die gesamte Oberfläche der Beschichtung bearbeitet werden. Die Tiefe der Strukturen der Beschichtung wird dabei durch die angelegte Spannung, die Stärke des Ionen- oder Elektronenstrahls, die Masse der verwendeten Ionen und die Geometrie der Abbildung des Ionen- oder Elektronenstrahls auf die Oberfläche der Beschichtung vorgegeben. Für das direkte Ionen- oder Elektronenstrahlen von Strukturen in die Beschichtung wird es erfindungsgemäß bevorzugt, wenn die Beschichtung aus einem elektrisch leitfähigen Material besteht, so dass elektrische Ladungen abgeleitet werden können.

Eine weitere Alternative zu den vorstehend beschriebenen Ätzverfahren stellt die Laserablation der Beschichtung dar. Durch Ändern von Parametern, wie beispielsweise Laserintensität, Laserleistung, mittlere Pulsdauer von Laserpulsen und Bestrahlungsdauer kann die Tiefe der Strukturen in der Beschichtung geeignet vorgegeben werden.

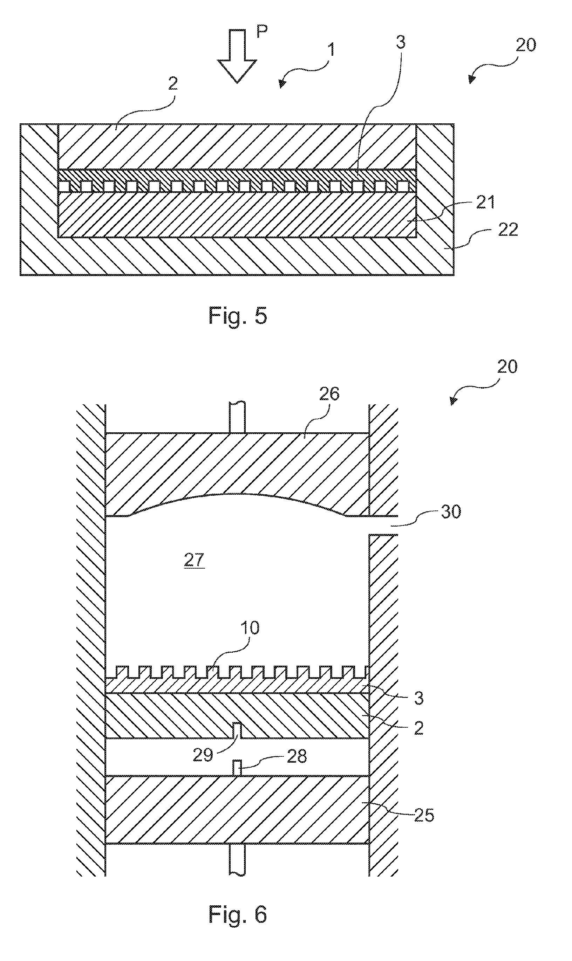

Die Fig. 5 zeigt in einer schematischen Schnittansicht eine Vorrichtung zur Herstellung von optischen Elementen gemäß einer ersten Ausführungsform der vorliegenden Erfindung. Die Vorrichtung 20 weist eine rinnen- oder wannenförmig ausgebildete Gegenform 22 auf, wobei in dem Boden der Gegenform 22 ein optisches Substrat 21 aufgenommen ist. Gemäß der Fig. 5 wird der Master 1, der ein Substrat 2 und die mit Strukturen versehene Beschichtung 3 umfasst, gegen das von der Gegenform 22 gehaltene optische Substrat 21 gedrückt. Damit die Strukturen abgeformt werden können, ist zumindest der Master 1 auf eine Temperatur oberhalb der Schmelztemperatur des optischen Substrats 21 erwärmt, so dass zumindest die Oberfläche des Glassubstrats 21 verformbar ist. Wie dem Fachmann ohne weiteres ersichtlich ist, kann das optische Substrat 21 auch in Form einer Schmelze aus einem Glas oder einer Glaskeramik oder einem Kunststoff in die Vorrichtung 20 eingebracht werden, mit einer Temperatur oberhalb der Schmelztemperatur. Auf diese Weise werden die Strukturen in der Beschichtung 3 des Masters 1 mittels Heißformgebung oder Heißprägung auf die Oberfläche des optischen Substrats 21 übertragen.

Wie der vorstehenden Beschreibung ohne weiteres entnommen werden kann, ist ein allgemeinerer Gesichtspunkt der vorliegenden Erfindung auf die Herstellung eines geeignet strukturierten Masters zum Abformen von optisch wirksamen Strukturen gerichtet. Somit können erfindungsgemäß auch andere geeignete Abformtechniken verwendet werden, was nachfolgend beispielhaft anhand der Fig. 6 beschrieben werden wird. Gemäß der Fig. 6 wird eine Vorrichtung zum Spritzgießen von optischen Elementen erläutert werden. Die Vorrichtung 20 umfasst einen Hohlraum 27, der von Seitenwänden, einem oberen Formstempel 26 und einem unteren Formstempel begrenzt wird. Zumindest der untere Formstempel ist als Master gemäß der vorliegenden Erfindung mit einem Substrat und einer darauf vorgesehenen Beschichtung 3 ausgebildet, in der Strukturen 10 ausgebildet sind. Selbstverständlich kann auch der obere Formstempel 26 als Master gemäß der vorliegenden Erfindung ausgebildet sein, was beispielhaft in der Fig. 2b gezeigt ist. Unterhalb des Masters ist ein Druckstempel 25 vorgesehen, mit einem Zentrierzapfen 28, der in die Ausnehmung 29 auf der Unterseite des Substrats 2 eingreift, um den als unteren Formstempel dienenden Master präzise zu führen. Durch den Einlass 30 wird das Material des optischen Elements eingespritzt oder eingegossen, beispielsweise eine Glasschmelze, eine Schmelze eines Glaskeramik-Ausgangsglases, eine Schmelze eines Glaskeramik-Grünglases, ein flüssiger Kunststoff oder ein flüssiges Polymer.

Auch andere Prägeverfahren sind gemäß der vorliegenden Erfindung grundsätzlich angedacht. So kann gemäß einer weiteren Ausführungsform (nicht gezeigt) auf einem Substratträger eine Kunststoffschicht von einer geeigneten Viskosität aufgebracht werden, in der mit Hilfe eines Masters gemäß der vorliegenden Erfindung optisch wirksame Strukturen durch Abformen bzw. Prägen ausgebildet werden. Durch Härten der Kunststoffschicht, beispielsweise durch UV-Bestrahlung oder Wärmeaushärten, kann die so abgeformte Struktur in der Kunststoffschicht ausgehärtet werden.

Wie der vorstehenden Beschreibung ohne weiteres entnommen werden kann, kann das Material des optischen Elements gemäß der vorliegenden Erfindung aus einer Vielzahl von Materialklassen gewählt werden. Als Gläser kommen insbesondere in Betracht: lowTg-Gläser, Kalknatronglas, Silicatglas, Boratglas, Borosilicatglas, Phosphatglas, Fluoridglas, Fluorphosphatglas, Halogenidglas, optisches Glas. Als Kunststoffmaterial für das optische Element kommt insbesondere in Betracht: PMMI, COC (Cycloolefincopolymer, insbesondere TOPAS® , COP (Cycloolefinpolymer, insbesondere Zeonex® , PMMA, Polyurethan, PC, PS, SAN, PMP, PET. Selbstverständlich kommen gemäß der vorliegenden Erfindung auch optische Elemente aus einem Glas mit einer Kunststoffbeschichtung in Betracht. Vorteilhaft an der Verwendung von Kunststoffmaterialien ist, dass der Abformvorgang bei relativ niedrigen Temperaturen ausgeführt werden kann. Selbstverständlich kann ein optisches Element gemäß der vorliegenden Erfindung aus einer Kombination aus einem normalen Glas und einem lowTG-Glas ausgebildet sein. Selbstverständlich eignet sich das erfindungsgemäße Abformverfahren auch zur Ausbildung von optisch wirksamen Strukturen auf anderen Materialien, beispielsweise auf Halbleiter-Substraten, wobei die optisch wirksamen Strukturen aus einem Kunststoff bestehen.

Wie der vorstehenden Beschreibung ohne weiteres entnommen werden kann, können gemäß der vorliegenden Erfindung optische Elemente mit beliebigen diffraktiven oder refraktiven Strukturen ausgebildet werden. Ferner können erfindungsgemäß kompakte hybride Mikrooptiken hergestellt werden, die sowohl diffraktive als auch refraktive Elemente aufweisen. Ein Beispiel für eine solche hybride Mikrooptik ist in der Fig. 7 gezeigt. Auch mit der Vorrichtung gemäß der Fig. 6 lässt sich eine plankonvexe Linse herstellen. Die durch die Strukturen in der Beschichtung des Masters vorgegebenen diffraktiven Strukturen in der planen Oberfläche eines solchen plankonvexen optischen Elements können so ausgelegt sein, dass insgesamt ein achromatisches optisches Element ausgebildet wird, also die Wellenlängenabhängigkeit des Brechungsindex des Materials des optischen Elements durch eine entsprechende gegenläufige Wellenlängenabhängigkeit der diffraktiven Strukturen in der planen Oberfläche des optischen Elements kompensiert werden kann.

Weitere bevorzugte Anwendungsbereiche der optischen Elemente gemäß der vorliegenden Erfindung sind insbesondere diffraktive optische Elemente (DOEs), computergenerierte Hologramme, optische Linsen für Massenanwendungen, beispielsweise für Digitalkameras oder Handys, RGB-Laserdisplays, diffraktive Optiken und Mikrooptiken für Hochleistungslaser, Diodenlaser und diodengepumpte Festkörperlaser, Beugungsgitter, insbesondere geblazete Beugungsgitter und Fresnel-Zonenlinsen.

### Ausführungsbeispiel 1

Auf ein Substrat aus einem Stahl wurde mittels Ionenstrahldeposition (IBD; ion beam deposition) von Al₂O₃ eine Schicht aus Al₂O₃ mit einer Dicke von 2000nm ausgebildet. Zur Ionenstrahldeposition wurde eine Kaufmann-Quelle verwendet. Als Arbeitsgas für den Ionenstrahl wurde Argon (Ar) verwendet, die Sputterzeit betrug etwa 106 min.

Die so auf dem Substrat ausgebildete Beschichtung aus Al₂O₃ wurde durch reaktives Ionenätzen (RIE; reactive ion etching) in einer Anlage vom Typ Vacutec 500 strukturiert. Als Ätzgas wurde eine Gasströmung von CF₄ (47 sccm) verwendet, der Arbeitsdruck betrug etwa 160 mTorr. Als Ätzmaske wurde vor dem Ätzen eine Chromschicht aufgebracht.

Durch das reaktive Ionenätzen wurden in der Beschichtung aus Al₂O₃ rillenartige Strukturen zum Abformen eines Beugungsgitters ausgebildet. Die maximale Ätztiefe betrug 420 nm. Eine mikroskopische Untersuchung bei einer 400-fachen Vergrößerung ergab, dass in der Cr-Schicht kein sichtbarer Abtrag stattfand. Die Cr-Schicht ist also eine stabile Maskierschicht für das reaktive Ionenätzen mit CF₄. Die Strukturen in der Beschichtung aus Al₂O₃ hatten eine sehr hohe Kantensteilheit und eine nur geringe Kantenrundung. Die Strukturübertragung auf optische Substrate, wie beispielsweise Glas oder Glaskeramik, war hervorragend.

### Ausführungsbeispiel 2

Auf ein Substrat aus einem Stahl wurde mittels DC-Magnetron-Sputtern eine Chromschicht (Cr) mit einer Dicke von 100nm ausgebildet. Als Target wurde Chrom mit einem Durchmesser von 3 Zoll und einer Reinheit von 99,99 (4N) verwendet. Als Gas beim Sputtern wurde Argon 5.0 verwendet, der Druck bei der Beschichtung betrug etwa 7,5 x 10⁻⁴ Torr. Die Beschichtungszeit betrug etwa 200s.

Auf die Cr-Beschichtung wurde eine Photolackschicht aufgebracht, die photolithographisch mit einem Gittermuster belichtet wurde. Unbelichtete Photolackschichtabschnitte wurden abgespült. Die so auf dem Substrat ausgebildete Beschichtung aus Cr wurde durch nasschemisches Ätzen manuell in einem Becherglas unter Reinraumbedingungen geätzt. Es wurde eine Ätzlösung aus K₃Fe(CN)₆ und NaOH verwendet. Die Temperatur beim Ätzen betrug 50°C. Nach dem Ätzen wurde mit DI-Wasser ca. 60s abgespült, anschließend wurde das Substrat mit 4000 Umin während 40s trockengeschleudert.

Durch das nasschemische Ätzen wurden in der Beschichtung aus Cr rillenartige Strukturen zum Abformen eines Beugungsgitters ausgebildet. Die maximale Ätztiefe betrug etwa 90 nm. Eine mikroskopische Untersuchung bei einer 400-fachen Vergrößerung ergab, dass in der Cr-Schicht kein sichtbarer Abtrag stattfand. Die Strukturen in der Cr-Beschichtung hatten eine sehr hohe Kantensteilheit und eine nur geringe Kantenrundung. Die Strukturübertragung auf optische Substrate, wie beispielsweise Glas oder Glaskeramik, war hervorragend.

### Ausführungsbeispiel 3

Auf ein Substrat aus einem Stahl wurde mittels Ionenstrahldeposition (IBD; ion beam deposition) von ZrO₂ eine Schicht aus ZrO₂ mit einer Dicke von 2000nm ausgebildet. Zur Ionenstrahldeposition wurde eine Kaufmann-Quelle verwendet. Als Arbeitsgas für den Ionenstrahl wurde Argon (Ar) verwendet, die Sputterzeit betrug etwa 138 min.

Die so auf dem Substrat ausgebildete Beschichtung aus ZrO₂ wurde durch Ionenstrahlätzen (IBE; ion beam etching) strukturiert. Hierzu wurde eine Kaufmann-Quelle verwendet, das Arbeitsgas für den Ionenstrahl war Ar bei einem Arbeitsdruck von 3,2 x 10⁻⁴ mbar. Als Maskierschicht wurde eine Chromschicht mit einer Dicke von 100nm aufgebracht und anschließend durch Belichten eines AZ 5214 E Photoresists (Dicke: 1400nm) strukturiert.

Durch das reaktive Ionenätzen wurden in der Beschichtung aus ZrO₂ rillenartige Strukturen zum Abformen eines Beugungsgitters ausgebildet. Die maximale Ätztiefe betrug 600 nm. Eine mikroskopische Untersuchung bei einer 400-fachen Vergrößerung ergab, dass in der Cr-Schicht kein sichtbarer Abtrag stattfand. Die Strukturen in der Beschichtung aus ZrO₂ hatten eine sehr hohe Kantensteilheit und eine nur geringe Kantenrundung. Die Strukturübertragung auf optische Substrate, wie beispielsweise Glas oder Glaskeramik, war hervorragend.

### Bezugszeichenliste

- 1: Druck- oder Prägestempel / Werkzeug
- 2: Substrat
- 3: Beschichtung
- 4a, b: Planer Abschnitt
- 5: Konkaver Abschnitt
- 6: Übergangs-/Trennbereich / Stufe
- 7: Ätzstoppschicht
- 10: Mikrostruktur / Vorsprung
- 11: Photolack
- 12: Maske
- 13: Belichtung
- 15: Geneigter Abschnitt
- 16: Gestufter Abschnitt
- 20: Vorrichtung zur Herstellung von optischen Elementen
- 21: Glasschmelze / optisches Substrat
- 22: Gegenform / Glasschmelzenaufnahme
- 25: Druckstempel
- 26: Refraktiver Formstempel
- 27: Innenvolumen
- 28: Zapfen
- 29: Zapfenaufnahme
- 30: Einlass
- 40: Optisches Element
- 41: Optisches Substrat
- 42: diffraktive Strukturen / Beugungsgitter
- 43: refraktive Strukturen

- 50-53: Verfahrensschritte

## Patentansprüche

1. Verfahren zur Herstellung eines Masters (1) zur Herstellung von optischen Elementen mit optisch wirksamen Strukturen durch Abformen von auf dem Master (1) ausgebildeten Strukturen auf einer Oberfläche eines optischen Substrats, mit den folgenden Schritten:
Bereitstellen eines Substrats (2);
Beschichten einer Oberfläche des Substrats (2) zum Ausbilden einer Beschichtung (3) auf dem Substrat (2); und
Strukturieren der Beschichtung (3), um in der Beschichtung (3) Strukturen (10) auszubilden.

2. Verfahren nach Anspruch 1, bei dem der Schritt des Strukturierens der Beschichtung (3) ein Ionenstrahlätzen (IBE), ein reaktives Ionenstrahlätzen (RIBE) oder ein chemisch unterstütztes Ionenstrahlätzen (CAIBE) umfasst.

3. Verfahren nach einem der vorhergehenden Ansprüche, bei dem der Schritt des Beschichtens der Oberfläche des Substrats (2) ferner das Ausbilden einer Maskenschicht (11; 11, 12) und das Ausbilden eines Musters in der Maskenschicht (11; 11, 12) umfasst.

4. Verfahren nach Anspruch 3, bei dem der Schritt des Ausbildens der Maskenschicht das Aufbringen einer Photolackschicht (11) auf der Beschichtung (3) umfasst.

5. Verfahren nach Anspruch 4, bei dem der Schritt des Ausbildens des Musters in der Maskenschicht (11; 11, 12) die Schritte umfasst:
Bereitstellen einer Maskenschicht (12) in Anlage zu der Photolackschicht (11) oder in deren unmittelbarer Nähe; und
Belichten der Photolackschicht (11) durch die Maskenschicht, um in der Photolackschicht (11) Strukturen auszubilden.

6. Verfahren nach Anspruch 1, bei dem der Schritt des Strukturierens der Beschichtung (3) ein direktes Bearbeiten der Beschichtung (3) oder einer Maskenschicht (11; 11, 12) umfasst.

7. Verfahren nach Anspruch 6, bei dem der Schritt des direkten Bearbeitens ein Ionen- oder Elektronenstrahlschreiben von Strukturen in die Beschichtung (3) oder in die Maskenschicht (11; 11, 12) umfasst.

8. Verfahren nach Anspruch 7, bei dem die Maskenschicht eine Photolackschicht (11) umfasst.

9. Verfahren nach Anspruch 6, bei dem der Schritt des direkten Bearbeitens den Schritt einer Laserablation zur Ausbildung von Strukturen in der Beschichtung (3) oder in der Maskenschicht (11; 11, 12) umfasst.

10. Verfahren nach einem der vorhergehenden Ansprüche, bei dem der Schritt des Beschichtens der Oberfläche des Substrats (2) das Beschichten der Oberfläche des Substrats (2) mit einem Material umfasst, das die Benetzbarkeit des Masters (1) mit einem Material des optischen Substrats herabsetzt.

11. Verfahren nach einem der vorhergehenden Ansprüche, bei dem der thermische Ausdehnungskoeffizient des Materials der Beschichtung (3) an den thermischen Ausdehnungskoeffizienten des Materials des Substrats (2) angepasst ist.

12. Verfahren nach einem der vorhergehenden Ansprüche, bei dem der Schritt des Strukturierens der Beschichtung (3) das Ausbilden von Vertiefungen in der Beschichtung (3) umfasst, die sich nicht bis zu der Unterseite der Beschichtung (3) erstrecken.

13. Verfahren nach einem der vorhergehenden Ansprüche, bei dem der Schritt des Strukturierens der Beschichtung (3) das Ausbilden von Strukturen (10) zumindest in einem Abschnitt (4b) der Beschichtung umfasst, wobei die Strukturen (10) nach dem Abformen auf die Oberfläche des optischen Substrats mittels Heißformgebung oder Heißprägen die Ausbildung von diffraktiven optischen Strukturen bewirken.

14. Verfahren nach Anspruch 13, bei dem der Schritt des Beschichtens der Oberfläche des Substrats das Ausbilden einer Beschichtung (3) mit einer Dicke d umfasst, die gegeben ist durch: d ≥ λ/Δn, wobei
λ einer Wellenlänge von Licht entspricht, das von den diffraktiven optisch wirksamen Strukturen gebeugt wird; und
Δn einer Differenz zwischen dem Brechungsindex des Materials des optischen Substrats und dem Brechungsindex von Luft entspricht.

15. Verfahren nach Anspruch 13 oder 14, bei dem die Strukturen (10) in der Beschichtung (3) durch m Prozessschritte ausgebildet werden, wobei die Strukturen gestuft ausgebildet werden und bis zu 2^{m} unterschiedliche Höhenniveaus aufweisen.

16. Verfahren nach einem der Ansprüche 13 bis 14, bei dem die Strukturen (10) in der Beschichtung (3) computergenerierte Hologramme sind.

17. Verfahren nach einem der vorhergehenden Ansprüche, bei dem der Schritt des Strukturierens der Beschichtung (3) das zumindest abschnittsweise Ausbilden von Strukturen (10) umfasst, die nach dem Abformen auf die Oberfläche des optischen Substrats mittels Heißformgebung oder Heißprägen die Ausbildung von refraktiven optischen Strukturen bewirken.

18. Master zur Herstellung von optischen Elementen mit optisch wirksamen Strukturen durch Abformen von auf dem Master (1) ausgebildeten Strukturen auf einer Oberfläche eines optischen Substrats, wobei der Master ein Substrat (2) umfasst, auf welchem eine Beschichtung (3) ausgebildet ist, und wobei auf dem Master Strukturen (10) ausgebildet sind, um auf die Oberfläche des optischen Substrats abgeformt zu werden, **dadurch gekennzeichnet, dass** die Strukturen (10) in der Beschichtung (3) ausgebildet sind.

19. Master nach Anspruch 18, hergestellt mittels eines Verfahrens nach einem der vorhergehenden Ansprüche.

20. Master nach Anspruch 18 oder 19, wobei das Substrat zumindest abschnittsweise gestuft ausgebildet ist oder zumindest abschnittsweise Vertiefungen und/oder Erhebungen aufweist.

21. Verfahren zum Herstellen von optischen Elementen mit optisch wirksamen Strukturen, mit den folgenden Schritten:
Bereitstellen eines Masters (1), der ein Substrat (2) und eine auf dem Substrat (2) aufgebrachte Beschichtung (3) aufweist, wobei in der Beschichtung (3) Strukturen (10) ausgebildet sind; und
Abformen der Strukturen (10) auf eine Oberfläche eines optischen Substrats, um auf der Oberfläche die optisch wirksamen Strukturen auszubilden.

22. Verfahren nach Anspruch 21, bei dem der Schritt des Bereitstellens des Masters (1) die Verfahrenschritte nach einem der Ansprüche 1 bis 18 umfasst.

23. Verfahren nach Anspruch 21 oder 22, bei dem der Schritt des Abformens der Strukturen eine Heißformgebung oder ein Heißprägen der Oberfläche des optischen Substrats umfasst.

24. Verfahren nach Anspruch 21 oder 22, bei dem der Schritt des Abformens der Strukturen (10) ein Prägen einer Kunststoff- oder Polymerschicht und ein Aushärten der Kunststoff- oder Polymerschicht zu einer Schicht umfasst, in welcher die optisch wirksamen Strukturen ausgebildet sind.

25. Verfahren nach Anspruch 24, bei dem die Kunststoffschicht als Kunstharzschicht bereitgestellt wird.

26. Verfahren nach Anspruch 25, bei dem der Schritt des Aushärtens der Kunstharzschicht eine UV-Bestrahlung der Kunstharzschicht umfasst.

27. Verfahren nach Anspruch 21 oder 22, bei dem der Schritt des Abformens der Strukturen umfasst:
Bereitstellen einer Hohlform (27) mit zumindest einem Wandabschnitt (25), der von einem Master (1) nach einem der Ansprüche 19 bis 21 ausgebildet ist; und
Spritzgießen, Pressen, Blasen oder Pressblasen einer Schmelze eines Glases, eines Glaskeramik-Ausgangsglases, eines Kunststoffes oder eines Polymers in die Hohlform (27), um das optische Substrat auszubilden, auf dessen Oberfläche die optisch wirksamen Strukturen ausgebildet sind.

28. Optisches Element mit zumindest einer Oberfläche, auf welcher zumindest abschnittsweise optisch wirksame Strukturen (42, 43) ausgebildet sind, **dadurch gekennzeichnet, dass** die optisch wirksamen Strukturen mit einem Verfahren nach einem der Ansprüche 22 bis 27 strukturiert sind.
